# EUROPÄISCHE PATENTANMELDUNG

(11) **EP 3 542 619 A1**
(43) Veröffentlichungstag der Anmeldung: **25.09.2019**
(21) Anmeldenummer: 19163895.6
(22) Anmeldetag: 19.03.2019
(51) Int. Cl.: A01G 27/00, A01G 27/06

(54) **PFLANZENBEHÄLTER MIT INTEGRIERTEM SELBSTBEWÄSSERUNGSSYSTEM**

(30) Priorität: 20.03.2018 DE 102018106460
(71) Anmelder: Loew, Roland, 55270 Klein-Winternheim (DE)
(72) Erfinder: Loew, Roland, 55270 Klein-Winternheim (DE)

(57) **Zusammenfassung**

Die vorliegende Erfindung betrifft einen Pflanzenbehälter (1) mit einem integriertem Bewässerungssystem zur Bewässerung sowie zur Regelung der Bewässerung von Pflanzkulturen, welche in einer im Gehäuse (10) des Pflanzenbehälters (1) mit Bodenmaterial (2) gefüllten Aufnahme (11) eingebracht sind, wobei mindestens ein innerhalb des Gehäuses (10) bereitgestelltes Wasserreservoir (12) mit mindestens einem von außen zugänglichen Zulauf (13) sowie mindestens eine Füllstandsanzeige (14) vorgesehen sind. Der Pflanzenbehälter (1) ist erfindungsgemäß aus einem doppelwandigen Gehäuse (10) zur Aufnahme des Wasserreservoirs (12) gebildet, wobei eine in die Aufnahme (11) sowie das Bodenmaterial (2) hineinragende Einrichtung (15) zur kontinuierlichen Abgabe des Wassers der durch das Wasserreservoir (12) zwischen den Seitenwandungen (100, 101) des Gehäuses (10) gebildeten Wassersäule (3) vorgesehen ist, mittels der eine kontinuierliche Bewässerung der Pflanzkulturen erfolgt. Die Einrichtung (15) ist vorzugsweise aus einem eingeschränkt wasserdurchlässigen oder wasserdurchlässigen Material gebildet, welches derart beschaffen ist, dass das Wasser durch die Einrichtung (15) in das Bodenmaterial (2) diffundiert.

## Beschreibung

### Technisches Gebiet

Die vorliegende Erfindung betrifft einen Pflanzenbehälter mit einem integriertem Bewässerungssystem nach dem Obersatz des Patentanspruchs 1.

### Stand der Technik

Es ist aus dem Stand der Technik bekannt, zur unterflurigen Bewässerung sowie zur Regelung der Bewässerung von Pflanzkulturen, welche in einer im Gehäuse des Pflanzenbehälters bzw. Topfes mit Bodenmaterial gefüllten Aufnahme eingebracht sind, mindestens ein innerhalb des Gehäuses bereitgestelltes Wasserreservoir mit mindestens einem von außen zugänglichen Zulauf sowie mindestens eine Füllstandsanzeige vorzusehen. Oftmals sind die Böden der Pflanzgefäße derartiger Bewässerungssystemen mehrfach von einem hygroskopischen Material durchdrungen, das sich aus dem Pflanzgefäß bis zu dem Boden eines Unterbehälters erstreckt.

Diese Bewässerungssysteme weisen indes zahlreiche Nachteile auf. Einerseits ist nicht ausgeschlossen, dass es in dem Unterboden des Pflanzgefäßes zu einer Schimmelbildung kommt. Andererseits sind diese recht komplexen Systeme bedingt durch die zusätzlichen Unterbehälter sowie das in der Regel erforderliche, hygroskopische Material auch mit einem hohen technischen und manuellen Aufwand bei der Herstellung, der Installation, Pflege und Wartung durch den Anwender verbunden, zumal bekannte Systeme bereits nach wenigen Tagen wieder mit Wasser befüllt werden müssen.

Aus der DE 20 2006 013 556 U1 ist ein Pflanzenbehälter bekannt, der eine doppelwandige Ausführung durch Vorsehen eines nach oben offenen Außentopfes und eines nach oben offenen Innentopfes vorsieht, wobei der Innentopf aus dem Außentopf entnehmbar ist und der Innentopf an seinem oberen Ende einen Rand aufweist, der im eingesetzten Zustand des Innentopfes in den Außentopf auf dem oberen Rand des Außentopfen aufliegt. Gekennzeichnet ist dieser Pflanzenbehälter dadurch, dass an dem Rand wenigstens ein nach unten zur Bodenebene des Innentopfes gerichtetes Führungselement vorgesehen ist, das gleichzeitig im eingesetzten Zustand des Innentopfes in den Außentopf als Halteelement für den oberen Rand des Außentopfes ausgeführt ist.

### Darstellung der Erfindung

Der vorliegenden Erfindung liegt die Aufgabe zu Grunde, einen Pflanzenbehälter mit einem integriertem Bewässerungssystem zu schaffen, welcher die vorgenannten Probleme ausräumt und der ohne hohen technischen Aufwand auch im Hinblick auf die Erstinstallation als auch im Hinblick auf die spätere Pflege und Wartung eine optimale, kontinuierliche und gleichmäßige Bewässerung der Pflanzkulturen über einen möglichst langen Zeitraum erlaubt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Pflanzenbehälters sind in den abhängigen Unteransprüchen angegeben.

Erfindungsgemäß ist ein Pflanzenbehälter der eingangs genannten Art dadurch gekennzeichnet, dass er aus einem doppelwandigen Gehäuse zur Aufnahme des Wasserreservoirs gebildet ist, wobei eine in die Aufnahme sowie das Bodenmaterial hineinragende Einrichtung zur kontinuierlichen Abgabe des Wassers der durch das Wasserreservoir zwischen den Seitenwandungen des Gehäuses gebildeten Wassersäule vorgesehen ist, mittels der eine kontinuierliche Bewässerung der Pflanzkulturen erfolgt.

In einer ganz besonders vorteilhaften Ausführungsform der Erfindung ist die Einrichtung aus einem eingeschränkt wasserdurchlässigen oder wasserdurchlässigen Material gebildet ist, welches derart beschaffen ist, dass das Wasser durch die Einrichtung in das Bodenmaterial diffundiert, wobei die Einrichtung vorzugsweise aus einem eingeschränkt wasserdurchlässigen oder wasserdurchlässigen Vollmaterial besteht, wobei das eingeschränkt wasserdurchlässige oder wasserdurchlässige Material vorzugsweise Ton ist.

In einer weiteren Ausführungsform der Erfindung kann das eingeschränkt wasserdurchlässige oder wasserdurchlässige Material darüber hinaus auch jegliches andere Material, bspw. ein Kunststoff, mit einer offenporigen oder offenzelligen Struktur sein.

In einer weiteren Ausführungsform kann die Einrichtung auch aus einem mit mindestens einer eingeschränkt wasserdurchlässigen oder wasserdurchlässigen Wandung versehenen Behältnis mit einer unteren Öffnung gebildet sein.

Die Vorteile der vorliegenden Erfindung betreffen in erster Linie den einfachen Aufbau, die einfache Pflege und Installation des Pflanzbehälters sowie der durch die erfindungsgemäße Konstruktion bedingten Verhinderung einer Schimmelbildung innerhalb des Pflanzbehälters.

### Kurzbeschreibung der Zeichnungen

Weitere Ziele, Merkmale, Vorteile und Anwendungsmöglichkeiten des erfindungsgemäßen Pflanzenbehälters ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig. 1 den erfindungsgemäßen Pflanzenbehälter in einer perspektivischen Ansicht, aufgebrochen;

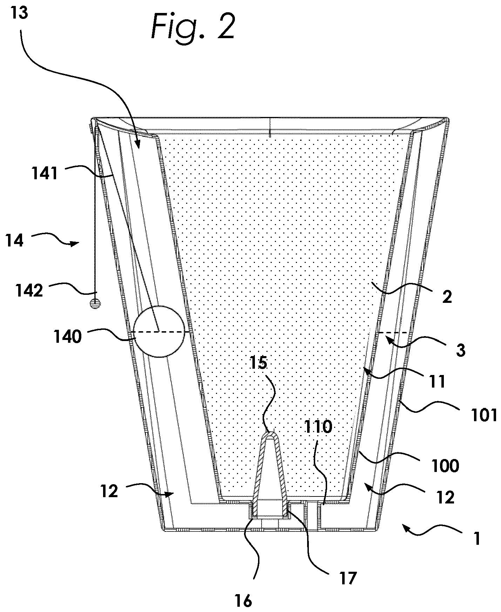

Fig. 2 den Pflanzenbehälter in einer Seitenansicht, aufgebrochen.

### Ausführung der Erfindung

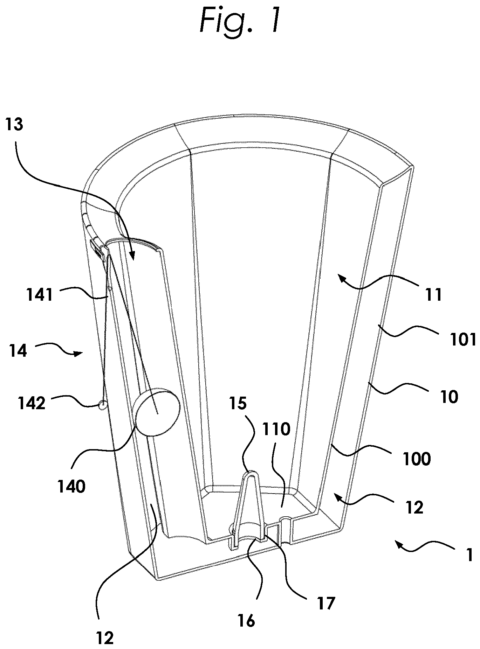

Wie aus Fig.1 ersichtlich, sind die in dem erfindungsgemäßen Pflanzenbehälter 1 anzuordnenden Pflanzkulturen in einer in einem doppelwandigen Gehäuse 10 des Pflanzenbehälters 1 mit Bodenmaterial 2 gefüllten Aufnahme 11 eingebracht. Dabei ist weiterhin mindestens ein innerhalb dieses Gehäuses 10 bereitgestelltes Wasserreservoir 12 innerhalb der Seitenwandungen 100, 101 des doppelwandigen Gehäuses 10 mit mindestens einem von außen zugänglichen Zulauf 13 sowie mindestens eine Füllstandsanzeige 14 vorgesehen.

In die Aufnahme 11 mit dem Bodenmaterial 2 ragt die erfindungsgemäße Einrichtung 15 zur kontinuierlichen Abgabe des Wassers der durch das Wasserreservoir 12 zwischen den Seitenwandungen 100, 101 des Gehäuses 10 gebildeten Wassersäule 3 hinein, mittels der eine kontinuierliche Bewässerung der Pflanzkulturen erreicht wird.

Wie aus Fig. 1 ersichtlich, ist die Einrichtung 15 vorteilhafterweise aus einem eingeschränkt wasserdurchlässigen oder wasserdurchlässigen Vollmaterial gebildet, welches in das Bodenmaterial 2 von unten hineinragt.

Hierzu ist die Einrichtung 15 vorteilhafterweise in einem Aufnahmeelement 16 am Aufnahmeboden 110 der Aufnahme 11 aufgenommen, das eine reversible Anordnung der Einrichtung 15 erlaubt.

Ferner ist vorzugsweise ein in das Aufnahmeelement 16 passgenau einbringbares Dichtungselement 17 vorgesehen, in welche die Einrichtung 15 passgenau einsetzbar ist.

Die Füllstandsanzeige 14 ist vorzugsweise durch mindestens einen innerhalb des Wasserreservoirs 12 angeordneten Schwimmer 140 gebildet, welcher mittels eines elastischen Zugmittels 141 mit einem außerhalb des Pflanzenbehälters 1 angeordneten Anzeigemittel 142 verbunden ist, wobei eine Umlenkung in der Weise vorgesehen ist, dass ein Steigen des Schwimmers 140 ein Sinken des Anzeigemittel 142 bewirkt.

Der erfindungsgemäße Pflanzenbehälter 1 beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Pflanzenbehälter
- 2: Bodenmaterial
- 3: Wassersäule
- 10: Gehäuse
- 11: Aufnahme
- 12: Wasserreservoir
- 13: Zulauf
- 14: Füllstandsanzeige
- 15: Einrichtung zur kontinuierlichen Abgabe des Wassers
- 16: Aufnahmeelement
- 17: Dichtungselement
- 100, 101: Seitenwandungen
- 110: Aufnahmeboden
- 140: Schwimmer
- 141: Zugmittel
- 142: Anzeigemittel

## Patentansprüche

1. Pflanzenbehälter (1) mit integriertem Bewässerungssystem zur Bewässerung sowie zur Regelung der Bewässerung von Pflanzkulturen, welche in einer im Gehäuse (10) des Pflanzenbehälters (1) mit Bodenmaterial (2) gefüllten Aufnahme (11) eingebracht sind, wobei mindestens ein innerhalb des Gehäuses (10) bereitgestelltes Wasserreservoir (12) mit mindestens einem von außen zugänglichen Zulauf (13) sowie mindestens eine Füllstandsanzeige (14) vorgesehen sind, **dadurch gekennzeichnet, dass**
der Pflanzenbehälter (1) aus einem doppelwandigen Gehäuse (10) zur Aufnahme des Wasserreservoirs (12) gebildet ist, wobei eine in die Aufnahme (11) sowie das Bodenmaterial (2) hineinragende Einrichtung (15) zur kontinuierlichen Abgabe des Wassers der durch das Wasserreservoir (12) zwischen den Seitenwandungen (100, 101) des Gehäuses (10) gebildeten Wassersäule (3) vorgesehen ist, mittels der eine kontinuierliche Bewässerung der Pflanzkulturen erfolgt.

2. Pflanzenbehälter (1) nach Anspruch 1,
**dadurch gekennzeichnet, dass**
die Einrichtung (15) aus einem eingeschränkt wasserdurchlässigen oder wasserdurchlässigen Material gebildet ist, welches derart beschaffen ist, dass das Wasser durch die Einrichtung (15) in das Bodenmaterial (2) diffundiert, wobei die Einrichtung (15) aus einem eingeschränkt wasserdurchlässigen oder wasserdurchlässigen Vollmaterial oder aus einem mit mindestens einer eingeschränkt wasserdurchlässigen oder wasserdurchlässigen Wandung versehenen Behältnis mit einer unteren Öffnung gebildet ist.

3. Pflanzenbehälter (1) nach Anspruch 2,
**dadurch gekennzeichnet, dass**
das eingeschränkt wasserdurchlässige oder wasserdurchlässige Material Ton ist.

4. Pflanzenbehälter (1) nach Anspruch 2,
**dadurch gekennzeichnet, dass**
das eingeschränkt wasserdurchlässige oder wasserdurchlässige Material ein Material mit einer offenporigen oder offenzelligen Struktur ist.

5. Pflanzenbehälter (1) nach einem der vorangegangenen Ansprüche,
**dadurch gekennzeichnet, dass**
die Einrichtung (15) kegelförmig ausgebildet ist.

6. Pflanzenbehälter (1) nach einem der vorangegangenen Ansprüche,
**dadurch gekennzeichnet, dass**
die Einrichtung (15) in einem Aufnahmeelement (16) am Aufnahmeboden (110) der Aufnahme (11) aufgenommen ist, das eine reversible Anordnung der Einrichtung (15) erlaubt.

7. Pflanzenbehälter (1) nach Anspruch 6,
**dadurch gekennzeichnet, dass**
ein in das Aufnahmeelement (16) passgenau einbringbares Dichtungselement (17) vorgesehen ist, in welche die Einrichtung (15) passgenau einsetzbar ist.

8. Pflanzenbehälter (1) nach einem der vorangegangenen Ansprüche,
**dadurch gekennzeichnet, dass**
die Füllstandsanzeige (14) durch mindestens einen innerhalb des Wasserreservoirs (12) angeordneten Schwimmer (140) gebildet ist, welcher mittels eines elastischen Zugmittels (141) mit einem außerhalb des Pflanzenbehälters (1) angeordneten Anzeigemittel (142) verbunden ist, wobei eine Umlenkung in der Weise vorgesehen ist, dass ein Steigen des Schwimmers (17) ein Sinken des Anzeigemittel (142) bewirkt.
